# EUROPEAN PATENT SPECIFICATION

(11) **EP 3 385 759 B1**
(45) Date of publication and mention of the grant of the patent: **14.07.2021**
(21) Application number: 18162082.4
(22) Date of filing: 15.03.2018
(51) Int. Cl.: G01V 5/00

(54) **MONITORING SYSTEM FOR REAL-TYPE MONITORING RELEASE OF RADIOACTIVE PARTICLES, BUILDING FACILITY PROVIDED THEREWITH, AND METHOD THEREFOR**
ÜBERWACHUNGSSYSTEM FÜR DIE REALE ÜBERWACHUNG DER FREISETZUNG RADIOAKTIVER PARTIKEL, GEBÄUDEEINRICHTUNG DAMIT UND VERFAHREN DAFÜR
SYSTÈME DE SURVEILLANCE RÉELLE DE LA LIBÉRATION DE PARTICULES RADIOACTIVES, INSTALLATION DE CONSTRUCTION ÉQUIPÉE DE CELUI-CI ET PROCÉDÉ ASSOCIÉ

(30) Priority: 07.04.2017 NL 2018665
(43) Date of publication of application: 10.10.2018
(73) Proprietor: Comecer Netherlands B.V., 8501 XC Joure (NL)
(72) Inventor: WIJMANS, Frans Johan, 8502 CK JOURE (NL)
(74) Representative: Verdijck, Gerardus

(56) References cited:
- WO-A1-2014/085081
- WO-A2-99/63546
- JP-A- 2005 140 706
- US-A- 4 551 298
- US-A1- 2013 085 788

## Description

The invention relates to a monitoring system of the release of radioactive particles from a facility, such as a cyclotron.

Conventional monitoring systems for real-time monitoring the release of radioactive particles use a number of detectors that detect a level of radio active particles in an exhaust. The actual release is determined by correcting or adjusting the measured levels using a simulation model.

These simulation models that are used by conventional monitoring systems may use a so-called Monte Carlo method. These Monte Carlo methods require a significant effort in building the model. Furthermore, validation measurements with a gas comprising radioactive particles have to be performed. Such calibration results in emission of radio active particles from the facility. This validation and modelling is done off-line and requires involving different specialists. Also, it is relatively time consuming. Furthermore, possibilities for varying properties of the calibration gas are limited in view of the restricted emissions for radioactive particles. This reduces the accuracy of the model that is used in such conventional monitoring system.

WO99/63546 discloses such a radiation monitoring system of a gas waste system. Theoretical calculations and software simulation based on detector surrounding geometry and properties are made to convert the count rates obtained by the detector at the top of a chimney into activity concentration levels. Detector efficiency is estimated and verified by means of a Monte Carlo calculation. Audible and visual alarm is provided in case the radiation levels monitored exceed a predetermined threshold. The monitoring system comprises on-line radiation monitoring channels, an area control unit and a gas waste management unit.

WO2014/085081 discloses a radiation analysis system and method permitting automatic optimization of absolute efficiencies of a gamma ray detector for different source shapes and sizes. Based on available benchmarks in the spectra, such as counts from an item in different geometries, further parameters are varied by randomly selecting values in an automated way, through the use of a mathematical model, and an optimal efficiency shape and magnitude is determined.

An object of the present invention is to provide a monitoring system that obviates or at least reduces one or more of the aforementioned problems.

This object is achieved with the monitoring system according to claim 1.

By providing a real-time monitoring system, the actual release of radioactive particles can be monitored. An alarm generator enables reporting and/or alarming, including warning, in case the release level of radioactive particles is above a certain threshold value. This may also enable an operator to adjust the system operation. The adjustments can be a function of the specific threshold value. This improves safety when working with radioactive particles, such as in a cyclotron for example. The monitoring system of the invention can also be advantageously applied to other buildings or facilities working with radioactive particles.

The system according to the invention comprises a controller that is configured for on-line determining an release level of radioactive particles of facility such as an aforementioned cyclotron. A detector, or a number of detectors, is operatively connected to the controller and capable of detecting a level of radioactive particles. It will be understood that such detector detects an amount of particles in a specific place at a specific time. The controller uses these measurements to determine an release level of radioactive particles. The controller determines this level on-line to enable real-time monitoring of the release of radioactive particles. For this purpose, the controller comprises an efficiency module.

The efficiency module in the system according to the invention calculates the release level of radioactive particles from the exhaust. This module uses the real-time measurements of radioactive particles that are received from the detector or a number of detectors. In addition, the module uses an on-line efficiency model to calculate the release level of radioactive particles based on the measured level of radioactive particles. According to the present invention, this on-line efficiency model is constructed from a generic off-line simulation model.

Therefore, the off-line building of a simulation model does not need to be repeated for a specific application. Instead, a more or less generic off-line simulation model is built. This off-line simulation model is constructed such that it is generically applicable to a range of building facilities. This enables building a more generic off-line simulation model 42 using all available (historic) data. This provides a robust, accurate and reliable off-line simulation model 42 that can be thoroughly validated. By generating or constructing the on-line efficiency model a more simple calculation of the release level of radioactive particles can be made. For example, this on-line model is determined by performing a best fit procedure resulting in a reliable efficiency model that is used in a specific application for a specific building facility 4 using specific geometry and/or detector specifications of the specific application.

To take into account the geometry of the system, in particular the geometry specifications of the exhaust, the efficiency module is preferably provided with inputs that are configured to receive geometry specifications of the exhaust.

These one or more inputs enable a user/operator to input a specific geometry into the efficiency model, such that the calculation of the actual release level can be done taking into account the specific characteristics of the system.

The geometry specifications preferably include the dimensions of the exhaust. This typically includes the relevant length, width, height, diameter and/or other characteristic dimensions of the exhaust and/or other parts of the system.

Preferably, the geometry specification also includes the shape of the exhaust, for example rectangular or circular. The use of these specific characteristics of the exhaust and/or other parts of the system improves the calculation of the release level.

In a presently preferred embodiment of the invention, the on-line efficiency module has further inputs to receive detector specifications.

Providing further inputs enables taking into account detector specifications. This enables the monitoring system of the invention to function with different detectors and detector types. This also enables replacement of the detectors or handling varying detector characteristics in time.

Especially the combination of using detector specifications and geometry specifications increases the overall applicability of the monitoring system of the invention. With the use of these specifications, the use of the invention can be advantageously applied to different systems/exhausts and different operations that work with radioactive particles. In fact, by providing the inputs from the mentioned specifications, the need of performing extensive Monte Carlo simulations for a specific application is obviated. Furthermore, the necessity of performing validations or calibrations with calibration gas comprising a number of radioactive particles is reduced or obviated. This renders the introduction of the monitoring system of the invention easier.

This further reduces the risk of a modelling error or a modelling mistake for a specific application of the monitoring system. This is achieved by the development of a more or less generic off-line simulation model capable of handling a variety of geometry specifications and/or detector specifications to generate an on-line efficiency model that can be applied over a range of geometry specifications and a range of detector specifications. This makes it possible to thoroughly check and validate building this on-line efficiency model, preferably using available data, preferably available historic data. This effectively enables re-use of available data when implementing a monitoring system of the invention in a new application through the use of the built in efficiency model that is constructed from the generic simulation model.

In a presently preferred embodiment the detector or number of detectors measure(s) the presence of an isotope. More specifically, in a presently preferred embodiment, the detector measures the isotope ¹⁸F. It will be understood that also other isotopes can be measured with one or more detectors. It is also possible to measure a number of isotopes with or a number of detectors. This measurement information is provided to the efficiency module to enable calculation of the release level of radioactive particles.

Preferably, the detector comprises an Nal-detector. This detector type proved to be a reliable detector for measuring relevant isotopes.

The invention also relates to a building facility comprising a monitoring system according to claim 8.

The building facility provides the same effects and advantages as those tailored for the monitoring system. Such building facility may comprise a cyclotron, for example. The building facility preferably comprises an exhaust wherein the detector is provided.

The present invention further also relates to a method for monitoring a release level for radioactive particles, in accordance with claim 10.

The method provides the same effects and advantages as those stated for the monitoring system and/or building facility.

In particular, the method provides a safe operation when working with radioactive particles with a monitoring system that is capable of timely generating a warning message or alarm and/or taking appropriate steps in the operation of the system.

The method further reduces the necessity of performing specific calibrations with calibration gas comprising radioactive particles when implementing the monitoring system of the invention to a new system or facility. This contributes to reducing the emission of radioactive particles.

In a preferred embodiment of the method according to the invention, the efficiency model is determined by off-line performing a number of simulations with the generic off-line model for a range of geometry specifications, and by determining a best fit of the simulation results for generating the on-line efficiency model. Providing an off-line model that is capable of calculating the release of radioactive particles based on some measurement information for a range of geometry specifications enables a thorough calibration of this model. This provides an accurate model. This model is used to determine an on-line efficiency model to calculate the release level of radioactive particles in a specific application for a given set of geometry specifications. In addition thereto, the detector specifications are also taken into account. This further improves the applicability of the method of the invention. Furthermore, this enables real-time calculation of the release of radioactive particles, thereby enabling the operator to take appropriate measures. This contributes to the overall safety of an operation handling radioactive particles.

Preferably, the off-line model is validated using measurement data, more preferably the measurement data substantially relates to historic data. This has the advantage that all data available can be used to validate the off-line model. The availability of more measurement data enables building an off-line model that is capable of calculating the release level of radioactive particles from an exhaust in a broad range of geometry specifications and/or detector specifications.

Therefore, the off-line model can be more accurate and robust. This enables a reliable simulation model and therewith a reliable on-line efficiency model that is generated from this off-line model. This prevents modelling errors, modelling mistakes.

This also prevents or reduces validation/calibration problems when using a calibration gas with radioactive particles in a limited level range as such levels are often restricted to prevent emission of a too high level of radioactive particles for calibration purposes.

In addition, the monitoring system of the invention can be implemented relatively fast in a new application as its on-line efficiency model is capable of dealing with a range of geometry specifications and/or detector specifications. Furthermore, a new application can be implemented without requiring huge efforts from specialists. This further improves the overall applicability of the monitoring system.

Exemplary embodiments of the monitoring system and/or building facility and/or method according the present invention are described here below on a basis of a non-limiting exemplary embodiment that is shown in the accompanying drawings, wherein:

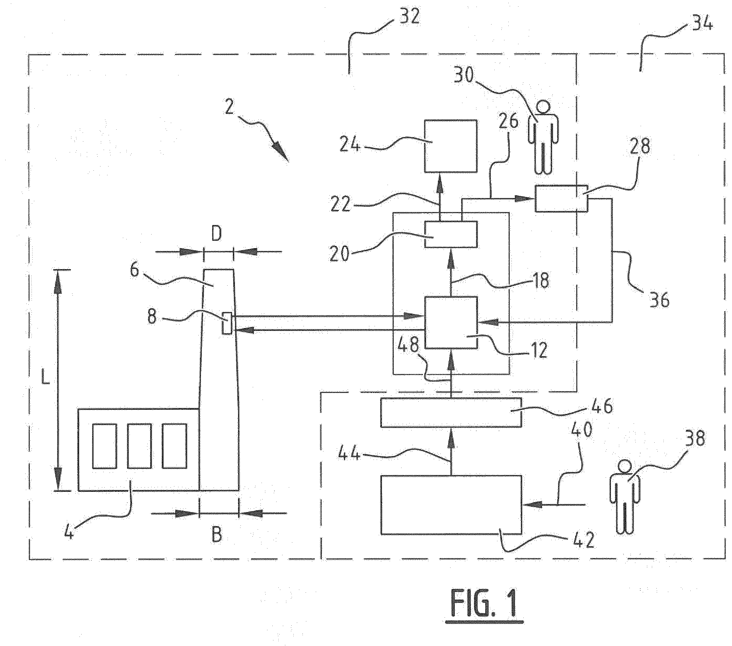

- Figure 1 shows a schematic overview of a monitoring system according to the invention.

Monitoring system 2 (figure 1) is applied to building facility 4 having exhaust 6. In the illustrated embodiment, exhaust 6 is provided with width B, length L and diameter D. In exhaust 6 there is provided detector 8 that is operatively connected to controller 10. Controller 10 comprises on-line efficiency module 12.

Controller 10 sends instructions 14 to detector 8 and receives measurements 16 that are provided to on-line efficiency model 12. On-line efficiency module 12 provides the release level 18 to alarm generator 20. On-line model module 12 comprises the efficiency model. Generator 20 generates alarm signal 22, if relevant, and transmits it to alarm system 24 and/or generates warning signal 26, if relevant, and sends it to interface 28 that informs operator 30. Controller 10, alarm system 24 and operator 30 operate in an on-line environment 32.

In the illustrated embodiment, from interface 28 geometry specifications 36 are provided to module 12. Programmer 38 provides settings to off-line simulation model 42, for example using Monte Carlo methods. Model 42 provides results 44 after which a best fit 46 is made for a range of geometry and detector settings 36. This generates the on-line efficiency model information 48 that is provided to module 12. These off-line operations are performed in off-line environment 34.

When building monitoring system 2 for specific facility 4 with exhaust 6, controller 10 is operatively connected to one or more detectors 8 that are installed in exhaust 6, for example. It will be understood that a number of detectors 8 can be provided, such as one, two, three or more.

Efficiency module 12 is provided with information 48 from off-line operation/environment 34 and the efficiency model is set with specification 36, for example originating from interface 28 and operator 30.

Furthermore, system 2 can be applied to exhaust 6 of building facility 4, such as a cyclotron. When the release level of radioactive particles exceeds one of the one or more threshold values, alarm signal 22 and/or warning signal 26 are generated and provided to alarm system 24 and/or interface 28 and operator 30. It will be understood that other configurations can also be envisaged in accordance with the invention, as defined by the appended claims.

The off-line operation in off-line environment 34 does not need to be repeated for a specific application, as module 12 is generically applicable to a range of building facilities 4. This enables programmer 38 to build a more generic off-line simulation model 42 using all available (historic) data. This provides a robust, accurate and reliable model 42, and, therefore, enables generating best fit 46 resulting in a reliable efficiency module 12 that is used in a specific application for a specific building facility 4 using specific geometry and/or detector specifications 36.

In an example of monitoring system 2, an NaI detector 8 is provided in exhaust 6 with a length L of 2 m, a width B of 0.5 m and a height of 0.5 m.

In a conventional approach, the volume is calculated and typically a few GBq of a known radionuclide is produced in a cyclotron and released in the exhaust. The measurement with detector 8 is compared to the known released number of particles and the ratio between the detected number of particles and a released number of these particles can be calculated. This relates to the efficiency (counts per second per Becquerel) for this specific geometry and can be used by a monitoring system.

According to the present invention, parameters of the geometry, such as length, width and height of exhaust 6, are provided to monitoring system 2. Using on-line module 12 monitoring system 2 calculates the efficiency model. Using this model the calculated efficiency for the measurements can be determined on-line. In the example, the volume of exhaust 6 is about 0.5 m³ and the efficiency is about 0.001190 cps/Bq.

The present invention is by no means limited to the above described preferred embodiments, but its scope is defined by the appended claims.

## Claims

1. Monitoring system for real-time monitoring release of radioactive particles, the system comprising:
- a controller for on-line determining a release level of radioactive particles from an exhaust; and
- a detector that is operatively connected to the controller and wherein the detector is configured for detecting a level of radioactive particles,
wherein the controller comprises:
- an efficiency module that calculates the release level of radioactive particles from the exhaust using the real-time level of radioactive particles detected by the detector and
- an alarm generator configured to report and/or generate an alarm if the release level of radioactive particles is above a threshold value; and
**characterized in that** the calculation of the release level of radioactive particles by the efficiency module makes use of an on-line efficiency model, and
- **in that** the on-line efficiency model has inputs configured to receive geometry specifications of the exhaust and has a further input to receive detector specifications, wherein the on-line efficiency model is constructed from a generic off-line simulation model; and
wherein the off-line simulation model is a generic off-line simulation model that is generally applicable to a range of building facilities.

2. Monitoring system according to claim 1, wherein the geometry specifications include the dimensions of the exhaust.

3. Monitoring system according to claim 1 or 2, wherein the geometry specifications include the shape of the exhaust.

4. Monitoring system according to one of the foregoing claims, wherein the efficiency model is determined by off-line performing of a number of simulations with the generic off-line model for a range of geometry specifications, and by determining a best fit of the simulation results for generating the on-line efficiency model.

5. Monitoring system according to one of the foregoing claims, wherein the detector measures the presence of an isotope.

6. Monitoring system according to claim 4, wherein the isotope comprises 18F.

7. Monitoring system according to one of the foregoing claims, wherein the detector comprises a Nal-detector.

8. Building facility comprising a monitoring system according to one of the foregoing claims.

9. Building facility according to claim 8, further comprising an exhaust wherein the detector is provided.

10. Method for monitoring a release level of radioactive particles, comprising the steps of:
- providing a monitoring system according to one of the foregoing claims 1-7;
- detecting a level of radioactive particles with the detector;
- determining the on-line efficiency model by off-line performing a number of simulations with the off-line model for a range of geometry specifications, and by determining a best fit of the simulation results;
- determining the release level of radioactive particles with the efficiency module using the on-line efficiency model; and
- reporting and/or generating an alarm if the release level is above a threshold value.

11. Method according to claim 10, further comprising the step of validating the off-line model using measurement data.

12. Method according to claim 11, wherein the measurement data substantially relate to historic data.

13. Method according to one of the foregoing claims 10-12, comprising the step of generating the on-line efficiency model from the off-line model.

## Patentansprüche

1. System zur Echtzeit-Überwachung des Freisetzens radioaktiver Partikel, wobei das System aufweist:
- eine Steuerung zur Online-Erfassung eines Freisetzungspegels radioaktiver Partikel aus einem Abzug; und
- einen Detektor, der betriebsbedingt mit der Steuerung verbunden ist und wobei der Detektor konfiguriert ist, einen Pegel radioaktiver Partikel zu erfassen,
wobei die Steuerung aufweist:
- ein Effizienzmodul, das den Freisetzungspegel radioaktiver Partikel aus dem Abzug unter Verwendung des Echtzeitpegels der vom Detektor erfassten radioaktiven Partikel berechnet und
- einen Alarmgeber, der so ausgebildet ist, dass er einen Alarm meldet und/oder generiert, wenn der Freisetzungspegel radioaktiver Partikel über einem Schwellenwert liegt;
**dadurch gekennzeichnet, dass**
die Berechnung des Freisetzungspegels radioaktiver Partikel durch das Effizienzmodul unter Verwendung eines Online-Effizienzmodells erfolgt, und
- dass das Online-Effizienzmodell Eingaben hat, die so ausgebildet sind, dass sie Geometriespezifikationen des Abzuges empfangen, und eine weitere Eingabe hat, um Detektorspezifikationen zu empfangen, wobei das Online-Effizienzmodell aus einem generischen Offline-Simulationsmodell aufgebaut ist; und
- wobei das Offline-Simulationsmodell ein generisches Offline-Simulationsmodell ist, das allgemein auf eine Reihe von Gebäudeeinrichtungen anwendbar ist.

2. Überwachungssystem nach Anspruch 1, wobei die Geometriespezifikationen die Abmessungen des Abzugs berücksichtigen.

3. Überwachungssystem nach Anspruch 1 oder 2, wobei die Geometriespezifikationen die Form des Abzugs berücksichtigen.

4. Überwachungssystem nach einem der vorherigen Ansprüche, wobei das Effizienzmodell durch Offline-Durchführung einer Anzahl von Simulationen mit dem generischen Offline-Modell für eine Reihe von Geometriespezifikationen und durch Bestimmen der besten Anpassung der Simulationsergebnisse zur Erzeugung des Online-Effizienzmodells ermittelt wird.

5. Überwachungssystem nach einem der vorherigen Ansprüche, wobei der Detektor das Vorhandensein eines Isotops misst.

6. Überwachungssystem nach Anspruch 4, wobei das Isotop 18F umfasst.

7. Überwachungssystem nach einem der vorherigen Ansprüche, wobei der Detektor einen Nal-Detektor umfasst.

8. Gebäudeeinrichtung mit einem Überwachungssystem nach einem der vorherigen Ansprüche.

9. Gebäudeeinrichtung nach Anspruch 8, ferner aufweisend einen Abzug, in dem der Detektor angeordnet ist.

10. Verfahren zur Überwachung eines Freisetzungspegels radioaktiver Partikel, aufweisend die folgenden Schritte:
- Bereitstellen eines Überwachungssystems nach einem der vorherigen Ansprüche 1 bis 7
- Erfassen eines Pegels radioaktiver Partikel mit dem Detektor;
- Bestimmen des Online-Effizienzmodells durch Offline basiertes Durchführen einer Anzahl von Simulationen mit dem Offline-Modell für einen Bereich von Geometriespezifikationen und durch Bestimmen der besten Anpassung der Simulationsergebnisse;
- Bestimmen des Freisetzungspegels radioaktiver Partikel mit dem Effizienzmodul unter Verwendung des Online-Effizienzmodells; und
- Melden und/oder Erzeugen eines Alarms, wenn der Freisetzungspegel über einem Schwellenwert liegt.

11. Verfahren nach Anspruch 10, ferner aufweisend den Schritt der Validierung des Offline-Modells unter Verwendung von Messdaten.

12. Verfahren nach Anspruch 11, wobei sich die Messdaten im Wesentlichen auf historische Daten beziehen.

13. Verfahren nach einem der vorherigen Ansprüche 10 bis 12, aufweisend den Schritt des Erzeugens des Online-Effizienzmodells aus dem Off-Line-Modell.

## Revendications

1. Dispositif de surveillance destiné à assurer la surveillance en temps réel de la libération de particules radioactives, le dispositif comprenant :
une unité de commande destinée à déterminer, en mode connecté, un niveau de libération de particules radioactives à partir d'un conduit d'évacuation ; et
un détecteur qui est raccordé de manière opérationnelle à l'unité de commande et dans lequel le détecteur est configuré afin de détecter un niveau de particules radioactives,
dans lequel l'unité de commande comprend :
un module d'efficacité qui calcule le niveau de libération de particules radioactives à partir du conduit d'évacuation en utilisant en temps réel le niveau de particules radioactives détecté par le détecteur et
un générateur d'alarme configuré de manière à établir un rapport et/ou à produire une alarme si le niveau de libération de particules radioactives est supérieur à une valeur de seuil ; et
**caractérisé en ce que** le calcul du niveau de libération des particules radioactives par le module d'efficacité utilise un modèle d'efficacité distant, et
**en ce que** le modèle d'efficacité distant présente des entrées configurées de manière à recevoir des spécifications géométriques du conduit d'évacuation et présente une autre entrée destinée à recevoir des spécifications de détecteur, dans lequel le modèle d'efficacité distant est construit à partir d'un modèle de simulation autonome générique ; et
dans lequel le modèle de simulation autonome est un modèle de simulation autonome générique qui peut être globalement appliqué à une variété d'installations de bâtiment.

2. Dispositif de surveillance selon la revendication 1, dans lequel les spécifications géométriques comportent des dimensions du conduit d'évacuation.

3. Dispositif de surveillance selon la revendication 1 ou 2, dans lequel les spécifications géométriques comportent la forme du conduit d'évacuation.

4. Dispositif de surveillance selon l'une des revendications précédentes, dans lequel le modèle d'efficacité est déterminé en exécutant, en mode déconnecté, un certain nombre de simulations avec le modèle autonome générique pour une plage de spécifications géométriques, et en déterminant une meilleure courbe de corrélation des résultats de simulation afin de générer le modèle d'efficacité distant.

5. Dispositif de surveillance selon l'une des revendications précédentes, dans lequel le détecteur mesure la présence d'un isotope.

6. Dispositif de surveillance selon la revendication 4, dans lequel l'isotope comprend le 18F.

7. Dispositif de surveillance selon l'une des revendications précédentes, dans lequel le détecteur comprend un détecteur à NaI.

8. Installation de bâtiment comprenant un dispositif de surveillance selon l'une des revendications précédentes.

9. Installation de bâtiment selon la revendication 8, comprenant, en outre, un conduit d'évacuation dans lequel détecteur est agencé.

10. Procédé destiné à assurer la surveillance d'un niveau d'évacuation de particules radioactives, comprenant les étapes de :
préparation d'un dispositif de surveillance selon l'une des revendications 1 à 7 précédentes ;
détection d'un niveau de particules radioactives avec le détecteur ;
détermination du modèle d'efficacité distant en exécutant en mode déconnecté un certain nombre de simulations avec le modèle autonome pour une plage de spécifications géométriques, et en déterminant une meilleure courbe de corrélation des résultats de simulation ;
détermination du niveau de libération de particules radioactives avec le module d'efficacité en utilisant le modèle d'efficacité distant ; et
établissement d'un rapport et/ou production d'une alarme si le niveau de libération est supérieur à une valeur de seuil.

11. Procédé selon la revendication 10, comprenant, en outre, l'étape de validation du modèle autonome en utilisant des données de mesure.

12. Procédé selon la revendication 11, dans lequel les données de mesure se rapportent sensiblement aux données historiques.

13. Procédé selon l'une des revendications 10 à 12 précédentes, comprenant l'étape de production du modèle d'efficacité distant à partir du modèle autonome.
